# EUROPEAN PATENT SPECIFICATION

(11) **EP 0 561 286 B1**
(45) Date of publication and mention of the grant of the patent: **18.06.1997**
(21) Application number: 93103977.0
(22) Date of filing: 11.03.1993
(51) Int. Cl.: H04N 5/44

(54) **Method and apparatus for direction related interpolation**
Verfahren und Vorrichtung zur richtungsabhängigen Interpolation
Méthode et appareil pour interpolation dépendant de la direction

(30) Priority: 20.03.1992 EP 92400762
(43) Date of publication of application: 22.09.1993
(73) Proprietor: THOMSON multimedia, 92400 Courbevoie (FR)
(72) Inventor: Boie, Werner, F-67100 Strasbourg (FR)
(74) Representative: Hartnack, Wolfgang, Dipl.-Ing.

(56) References cited:
- US-A- 4 985 764
- US-A- 5 093 721
- SIGNAL PROCESSING OF HDTV, PROCEEDINGS OF THE 2ND INTERNATIONAL WORKSHOP ON, EDITED BY L. CHIARIGLIONE L'AQUILA, IT 29.02 - 02.03 1988 29 February 1988, AMSTERDAM pages 319 - 328 PELE ET AL 'Field-rate conversion by motion estimation/compensation'
- SIGNAL PROCESSING OF HDTV, PROCEEDINGS OF THE 2ND INTERNATIONAL WORKSHOP ON, EDITED BY L. CHIARIGLIONE, L'AQUILA IT 29.02 - 02-03 1988 29 February 1988, AMSTERDAM pages 421 - 430 T. DOYLE' Interlaced to sequential conversion for EDTV applications'

## Description

The present invention relates to a method and to an apparatus for direction related interpolation.

### Background

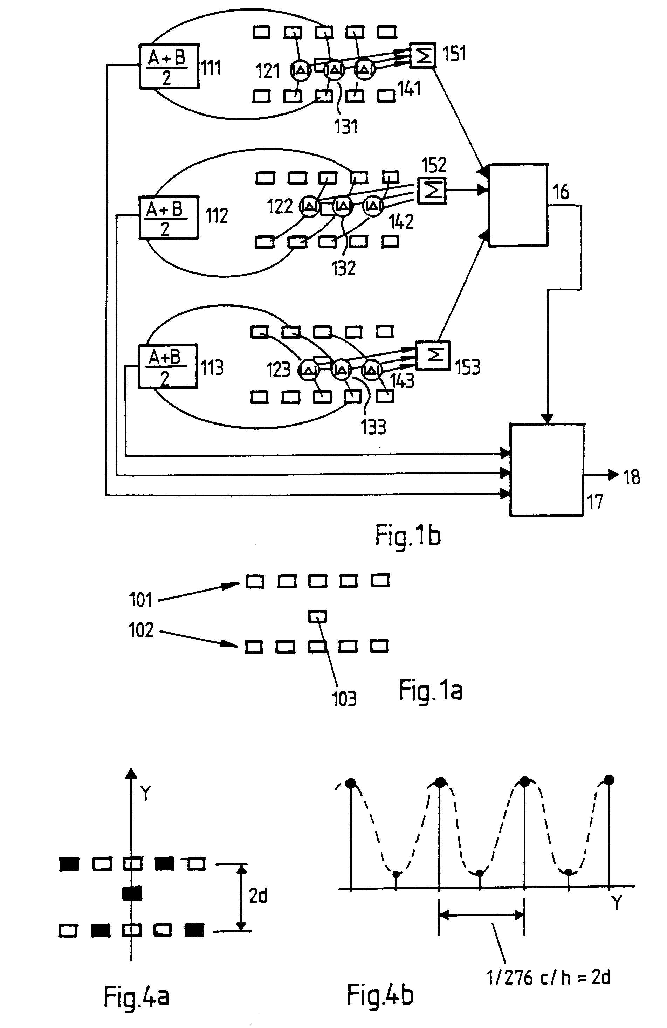

For Proscan conversion adjacent fields cannot be used to interpolate moving objects because motion blur will be introduced then. The most simple solution is to insert the average of the two adjacent lines for each missing line.
A technique superior to vertical averaging represents the DIAG3 algorithm depicted in Fig. 1. According to the found minimum gradient (absolute value is averaged over three pixels) the orientation of the interpolation filter is chosen. For simplicity of the hardware complexity only the two diagonal and the vertical direction are possible for an interpolation.
In Fig. 1a the current pixel 103 is to be interpolated from pixels of the same field of an interlaced input signal, containing the upper adjacent line 101 and the lower adjacent line 102. The interpolation of the current pixel is related to the direction of a structure in the picture content.

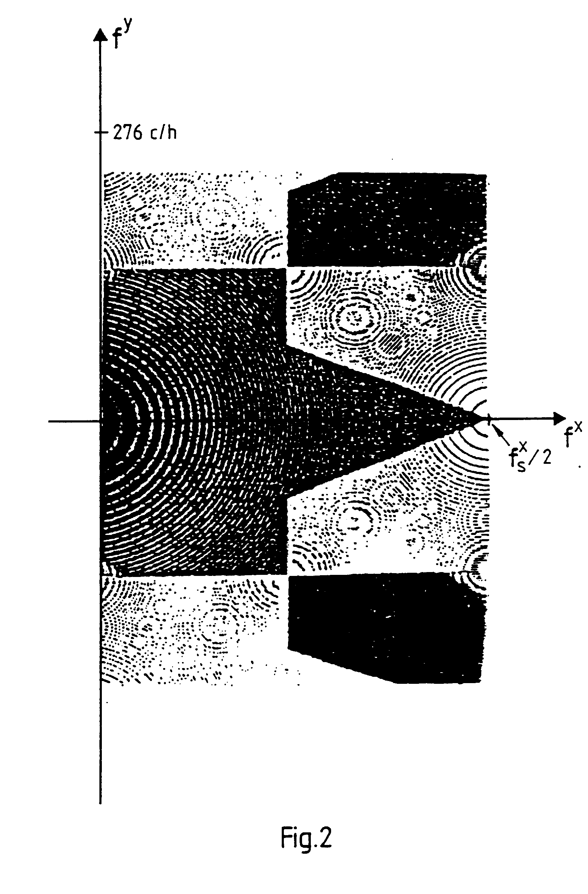

In Fig. 1b three average values for the current pixel are calculated in vertical direction with a first averager 111, in diagonal ascending direction with a second averager 112 and in diagonal descending direction with a third averager 113. Three absolute difference values between adjacent pixel pairs of the two adjacent lines are calculated direction related in the respective branches with first absolute difference value means 121, 131 and 141, with second absolute difference value means 121, 132 and 142 and with third absolute difference value means 123, 133 and 143. The three absolute difference values of each branch are summed in a first adder 151, in a second adder 152 and in a third adder 153, respectively. The minimum of the three sums is detected in a minimum detector 16 and used in a selector 17 to select the average value of the respective branch for forming the current ouput pixel value 18. For reasons based on the kind of orientation detection which is used, the DIAG3 interpolation method can produce some completely wrong structures. From the zone plate test signal interpolated with this method and shown in Fig. 2 it can be concluded that for only 5/8 (dark areas) of the f^{x}, f^{y} plane the upconverted signal shows a correctly reproduced structure. The maximum correctly interpolated vertical frequency in a 625 line system is 138c/p (cycles per picture height).

A similar algorithm is disclosed in US-A-4 985 764.

### Invention

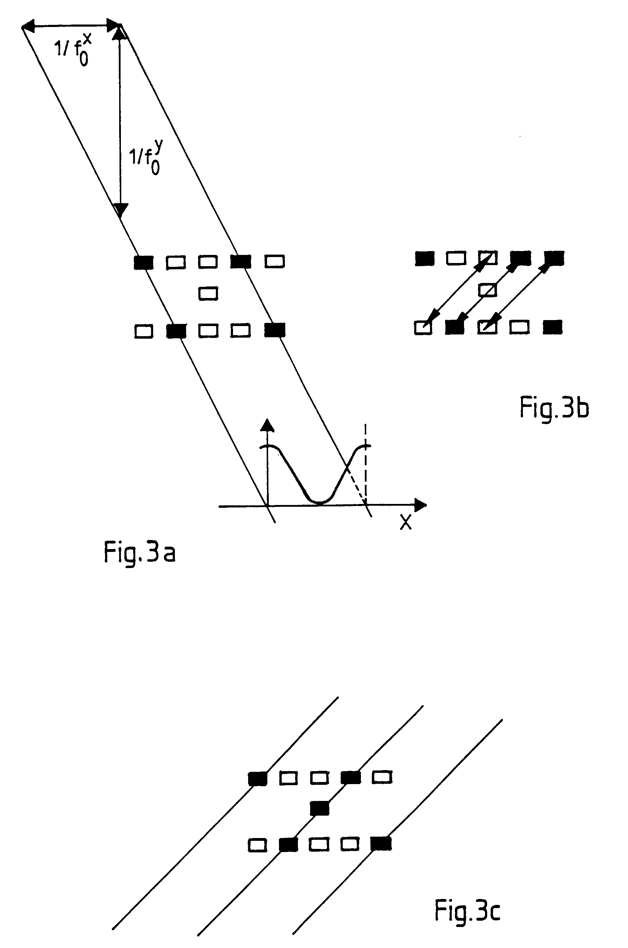

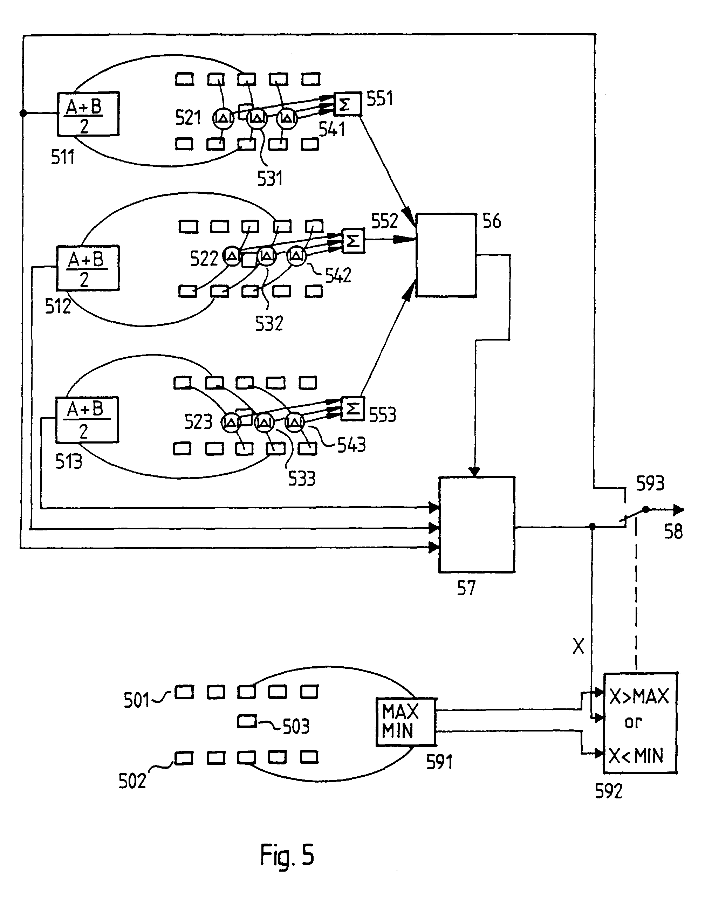

In Fig. 3a it is assumed that the input signal represents a luminance signal with a sinusodial modulation having a certain spatial frequency of f^{x} = f^{x}₀ and f^{y} = f^{y}₀ . For the given example all three differences for the depicted direction in Fig. 3b will become zero. This is obviously not the case in the other two directions. Therefore the wrong direction is chosen for the interpolation. Fig. 3c illustrates the reproduced wrong structure.
A closer look at the reproduced structure in Fig. 4a indicates that the algorithm tries to interpolate a higher vertical frequency component than it is possible in intrafield upconverted pictures, namely f^{y} = 1/2∗d = 276c/h, as depicted in Fig. 4b. If one assumes an interlace camera as pick-up device a structure with such a high vertical frequency is subjected to a high attenuation during the scanning process, since the vertical diameter of the camera spot is normally greater than the line distance of a frame. Then the scanned structure will either exhibit a small modulation depth or even disappear, as a consequence.

It is one object of the invention to disclose a method for improved direction related interpolation. This object is reached by the inventive method disclosed in claim 1.

Advantageous additional embodiments of the inventive method are resulting from dependent claim 2.

It is tested if the reconstructed pixel value exceeds or falls below the pixel values in the two adjacent lines of the input signal. If this happens, instead of one of the detected diagonal directions the vertical direction is taken, i.e. a vertical averaging is carried out.

In principle the inventive method consists in direction related interpolation of a current pixel, wherein one or more absolute difference values between pixel pairs of lines adjacent to the line of the current pixel are used to detect according to the minimum of said absolute difference values for each of said current pixels at minimum a vertical or a diagonal ascending or a diagonal descending interpolation direction, wherein
a) the average value of a respective of said pixel pairs according to said detected interpolation direction is taken as value for said current pixel, if this average value is not greater than the maximum and not less than the minimum of the two vertically adjacent pixel values of said current pixel,
b) the average value of the vertically adjacent pixel pair of said current pixel is taken otherwise.

It is a further object of the invention to disclose an apparatus which utilizes the inventive method. This object is reached by the apparatus disclosed in claim 3.

In principle the inventive apparatus comprises a first averager for calculating a first average value of a pixel pair in vertical direction, a second averager for calculating a second average value of a pixel pair in diagonal ascending direction and a third averager for calculating a third average value of a pixel pair in diagonal descending direction, and comprising absolute difference value calculating means for the respective pixel pair and respective adjacent pixel pairs according to said direction, wherein the outputs of said absolute difference value calculating means are summed in respective adders within each branch and the minimum of said sums is detected in a minimum detector and used in a selector to select according to said minimum the respective one of said average values, and wherein a first comparator circuit determines the maximum and the minimum value of the two pixels vertically adjacent to said current pixel and said average value is compared in a second comparator circuit with the minimum and maximum value found in said first comparator and
a) if said average value is greater than the maximum value or less than the minimum value a switch connects the output of said first averager to deliver said current output pixel value;
b) the output of said selector is connected to deliver said current output pixel value, otherwise.

### Drawings

Preferred embodiments of the invention are described with reference to the accompanying drawings, in which:
- Fig. 1: shows a direction related interpolation;
- Fig. 2: shows a respectively interpolated test pattern;
- Fig. 3: explains interpolation errors;
- Fig. 4: shows how a high vertical frequency is generated by the interpolation;
- Fig. 5: depicts the inventive direction related interpolation.

### Preferred embodiments

In Fig. 5 the current pixel 503 is to be interpolated from pixels of the same field of an interlaced input signal, containing the upper adjacent line 501 and the lower adjacent line 502. The interpolation of the current pixel is related to the direction of the structure in the picture content. Three average values for the current pixel 503 are calculated in vertical direction with a first averager 511, in diagonal ascending direction with a second averager 512 and in diagonal descending direction with a third averager 513. Three absolute difference values between adjacent pixel pairs of the two adjacent lines are calculated direction related in the respective branches with first absolute difference value means 521, 531 and 541, with second absolute difference value means 521, 532 and 542 and with third absolute difference value means 523, 533 and 543. The three absolute difference values of each branch are summed in a first adder 551, in a second adder 552 and in a third adder 553, respectively. The minimum of the three sums is detected in a minimum detector 56 and used in a selector 57 to select the average value X of the respective branch.
A first comparator circuit 591 determines the maximum and the minimum value of the two pixels vertically adjacent to the current pixel 503. The average value X is compared in a second comparator circuit 592 with the minimum and maximum value found in the first comparator. If X is greater than the maximum value or if X is less than the minimum value switch 593 connects the output of first averager 511 to output 58. Otherwise the output of selector 57 is connected to output 58 which delivers the current pixel value.

## Claims

1. Method for direction related interpolation of a current pixel (503), wherein one or more absolute difference values between pixel pairs of lines (501, 502) adjacent to the line of the current pixel (503) are used to detect (56) according to the minimum of said absolute difference values for each of said current pixels (503) at minimum a vertical or a diagonal ascending or a diagonal descending interpolation direction, wherein
a) the average (511, 512, 513) value (X) of a respective of said pixel pairs according to said detected interpolation direction is taken (593) as value (58) for said current pixel (503), if this average value (X) is not greater than the maximum and not less than the minimum of the two vertically adjacent pixel values of said current pixel (503),
b) the average value (511) of the vertically adjacent pixel pair of said current pixel (503) is taken (593) otherwise.

2. Method according to claim 1, **characterized in** that said average value (X) is compared, too, with pixel values adjacent to said vertical adjacent pixels.

3. Apparatus for carrying out the method according to claim 1 or 2, comprising a first averager (511) for calculating a first average value of a pixel pair in vertical direction, a second averager (512) for calculating a second average value of a pixel pair in diagonal ascending direction and a third averager (513) for calculating a third average value of a pixel pair in diagonal descending direction, and comprising absolute difference value calculating means (521, 531, 541; 522, 532, 542; 523, 533, 543) for the respective pixel pair and respective adjacent pixel pairs according to said direction, wherein the outputs of said absolute difference value calculating means are summed in respective adders (551; 552; 553) within each branch and the minimum of said sums is detected in a minimum detector (56) and used in a selector (57) to select according to said minimum the respective one of said average values (X), and wherein a first comparator circuit (591) determines the maximum and the minimum value of the two pixels vertically adjacent to said current pixel (503) and said average value (X) is compared in a second comparator circuit (592) with the minimum and maximum value found in said first comparator (591) and
a) if said average value (X) is greater than the maximum value or less than the minimum value a switch (593) connects the output of said first averager (511) to deliver said current output pixel (503) value;
b) the output of said selector (57) is connected to deliver said current output pixel (503) value, otherwise.

## Patentansprüche

1. Verfahren zur richtungsbezogenen Interpolation eines gegenwärtigen Pixels (503), bei dem ein oder mehrere absolute Differenzwerte zwischen Pixelpaaren von Zeilen (501, 502) benachbart zur Zeile des gegenwärtigen Pixels (503) verwendet werden, um gemäß dem Minimum der absoluten Differenzwerte für jedes gegenwärtige Pixel (503) wenigstens eine vertikale oder eine diagonal ansteigende oder eine diagonal absteigende Interpolationsrichtung festzustellen (56), wobei
a) der Durchschnitts-(511, 512, 513)-Wert (X) eines entsprechenden Pixelpaares gemäß der festgestellten Interpolationsrichtung als Wert (58) für das gegenwärtige Pixel (503) genommen wird (593), wenn dieser Durchschnittswert (X) nicht größer als das Maximum und nicht kleiner als das Minimum der beiden vertikal benachbarten Pixelwerte des gegenwärtigen Pixels (503) ist,
b) sonst der Durchschnittswert (511) des vertikal benachbarten Pixelpaares des gegenwärtigen Pixels (503) genommen wird (593).

2. Verfahren nach Anspruch 1, dadurch gekennzeichnet, daß der Durchschnittswert (X) auch mit Pixelwerten verglichen wird, die benachbart zu den vertikal benachbarten Pixeln sind.

3. Vorrichtung zur Durchführung des Verfahrens nach Anspruch 1 oder 2, umfassend einen ersten Durchschnittsbildner (511) zur Berechnung eines ersten Durchschnittswertes eines Pixelpaares in vertikaler Richtung, einen zweiten Durchschnittsbildner (512) zur Berechnung eines zweiten Durchschnittswertes eines Pixelpaares in diagonal ansteigender Richtung, und einen dritten Durchschnittsbildner (513) zur Berechnung eines dritten Durchschnittswertes eines Pixelpaares in diagonal absteigender Richtung, und umfassend absolute Differenzwert-Berechnungsmittel (521, 531, 541; 522, 532, 542; 523, 533, 543) für das entsprechende Pixelpaar und entsprechende benachbarte Pixelpaare gemäß der Richtung, wobei die Ausgänge der absoluten Differenzwert-Berechnungsmittel in entsprechenden Addierschaltungen (551; 552; 553) innerhalb jedes Zweiges addiert werden und das Minimum der Summen in einem Minimum-Detektor (56) festgestellt und in einer Auswählschaltung (57) verwendet wird, um gemäß dem Minimum den entsprechenden Durchschnittswert (X) auszuwählen, und wobei eine erste Vergleichsschaltung (591) den maximalen und den minimalen Wert der beiden dem gegenwärtigen Pixel (503) vertikal benachbarten Pixel bestimmt, und wobei der Durchschnittswert (X) in einer zweiten Vergleichsschaltung (592) mit dem minimalen und maximalen Wert verglichen wird, der in der ersten Vergleichsschaltung (591) gefunden wurde und
a) wenn der Durchschnittswert (X) größer als der maximale Wert oder kleiner als der minimale Wert ist, ein Schalter (593) den Ausgang des ersten Durchschnittsbildners (511) anschließt, um den Wert des gegenwärtigen Ausgangspixels zu liefern;
b) sonst der Ausgang der Auswahlschaltung (57) angeschlossen wird, um den Wert des gegenwärtigen Ausgangspixels (503) zu liefern.

## Revendications

1. Procédé d'interpolation dépendant de la direction d'un pixel en cours (503), dans lequel une ou plusieurs valeurs de différence absolues entre des paires de pixels de lignes (501, 502) adjacentes à la ligne du pixel en cours (503) sont utilisées pour détecter (56) conformément au minimum desdites valeurs de différence absolues pour chacun desdits pixels en cours (503) au moins une direction d'interpolation verticale ou ascendante diagonale ou descendante diagonale, dans lequel
a) la valeur moyenne (511, 512, 513) (X) d'une paire respective desdites paires de pixels conformément à ladite direction d'interpolation détectée est prise (593) comme valeur (58) dudit pixel en cours (503), si cette valeur moyenne (X) n'est pas supérieure au maximum et n'est pas inférieure au minimum des deux valeurs de pixels verticalement adjacents dudit pixel en cours (503),
b) autrement la valeur moyenne (511) de la paire de pixels verticalement adjacents dudit pixel en cours (503) est prise (593).

2. Procédé conformément à la revendication 1, caractérisé en ce que ladite valeur moyenne (X) est comparée, aussi, aux valeurs de pixels adjacents auxdits pixels adjacents verticaux.

3. Appareil pour effectuer le procédé conformément à la revendication 1 ou 2, comprenant un premier circuit de calcul de valeur moyenne (511) pour calculer une première valeur moyenne d'une paire de pixels dans la direction verticale, un deuxième circuit de calcul de valeur moyenne (512) pour calculer une deuxième valeur moyenne d'une paire de pixels dans la direction ascendante diagonale et un troisième circuit de calcul de valeur moyenne (513) pour calculer une troisième valeur moyenne d'une paire de pixels dans la direction descendante diagonale, et comprenant des moyens de calcul de valeur de différence absolue (521, 531, 541; 522, 532, 542; 523, 533, 543) pour la paire de pixels respective et les paires de pixels adjacents respectives conformément à ladite direction, dans lequel les sorties desdits moyens de calcul de valeur de différence absolue sont additionnées dans des circuits additionneurs respectifs (551; 552; 553) à l'intérieur de chaque branche et le minimum desdites sommes est détecté dans un détecteur de minimum (56) et utilisé dans un sélectionneur (57) pour sélectionner conformément audit minimum la valeur respective desdites valeurs moyennes (X), et dans lequel un premier circuit comparateur (591) détermine la valeur maximum et minimum des deux pixels verticalement adjacents audit pixel en cours (503) et ladite valeur moyenne (X) est comparée dans un deuxième circuit comparateur (592) à la valeur minimum et maximum trouvée dans ledit premier comparateur (591) et
a) si ladite valeur moyenne (X) est supérieure à la valeur maximum ou inférieure à la valeur minimum un commutateur (593) connecte la sortie dudit premier circuit de calcul de moyenne (511) pour fournir ladite valeur de pixel de sortie en cours (503);
b) la sortie dudit sélectionneur (57) est connectée pour fournir ladite valeur de pixel de sortie en cours (503), autrement.
